(19) Europäisches Patentamt
European Patent Office
Office européen des brevets

(11) EP 1 364 081 B1

(12) **FASCICULE DE BREVET EUROPEEN**

(45) Date de publication et mention de la délivrance du brevet:
**07.05.2008 Bulletin 2008/19**

(21) Numéro de dépôt: **02706884.0**

(22) Date de dépôt: **21.02.2002**

(51) Int Cl.:
***D01F 6/90*** *(2006.01)* ***C08L 77/00*** *(2006.01)*

(86) Numéro de dépôt international:
**PCT/FR2002/000646**

(87) Numéro de publication internationale:
**WO 2002/066716 (29.08.2002 Gazette 2002/35)**

(54) **PROCEDE DE FABRICATION DE FILS, FIBRES ET FILAMENTS**

VERFAHREN ZUR HERSTELLUNG VON FÄDEN, FASERN UND FILAMENTEN

METHOD FOR MAKING YARNS, FIBRES AND FILAMENTS

(84) Etats contractants désignés:
**AT BE CH CY DE DK ES FI FR GB GR IE IT LI LU MC NL PT SE TR**

(30) Priorité: **22.02.2001 FR 0102407**
**23.10.2001 FR 0113656**

(43) Date de publication de la demande:
**26.11.2003 Bulletin 2003/48**

(73) Titulaire: **RHODIA POLYAMIDE INTERMEDIATES**
**69192 Saint-Fons (FR)**

(72) Inventeurs:
- **CLEMENT, Florence**
  **F-69006 LYON (FR)**
- **KOSCHER, Arnaud**
  **F-69001 LYON (FR)**
- **PAK, Pierre**
  **09820 540 Sâo Bernardo do Campo SP (BR)**

(74) Mandataire: **Esson, Jean-Pierre et al**
**Rhodia Services,**
**Direction de la Propriété Industrielle,**
**Centre de Recherches de Lyon**
**BP 62**
**85, avenue des Frères Perret**
**69192 Saint-Fons Cédex (FR)**

(56) Documents cités:
**EP-A- 0 672 703**
**EP-A- 0 850 974**
**WO-A-00/68298**
**WO-A-97/46747**
**FR-A- 2 779 730**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne un procédé de fabrication de fils, fibres et filaments à base de polyamide, ainsi que les fils, fibres et filaments susceptibles d'être obtenus par le procédé.

Les fils, fibres et filaments à base de polyamide sont réalisés par filage en fondu d'un polyamide, ou d'une composition à base de polyamide. Le filage en fondu consiste à extruder le polyamide ou la composition à travers des filières, et à refroidir en sortie de filières. On fabrique ainsi des articles destinés à être utilisés dans de nombreux domaines. On cite à titre d'exemples les fils multifilamentaires pour l'industrie textile, les fibres destinées à être travaillées en filature, ou pour la fabrication d'articles non tissés, les câbles destinés à être coupés pour former des fibres courtes aptes à être flockées, les monofilaments et multifilaments pour des applications particulières notamment industrielles.

Les procédés de fabrication des fils, fibres et filaments peuvent varier considérablement, notamment par le domaine de la vitesse de filage. Selon le type de procédé les produits obtenus ont des propriétés différentes.

On connaît ainsi différentes familles de procédés de fabrication de fils, fibres et filaments. On cite par exemple les procédés de filage haute vitesse POY (Partially Oriented Yarn) (vitesse supérieure à 3500 m/min), FEI (Filage-Etirage Intégré) parfois dénommé aussi FOY (Fully Oriented Yarn), HOY (Higly Oriented Yarn) (vitesse supérieure à 5500 m/min). On cite également les procédés de filage basse vitesse LOY (Low Oriented Yarn) (vitesse inférieure à 3500 m/min). Ces procédés et plus particulièrement le procédé LOY comprennent une étape d'étirage permettant d'améliorer les propriétés mécaniques desdits produits. Cette étape d'étirage est également mise en oeuvre pour la fabrication des monofilaments. De plus, selon les applications, un étirage peut être appliqué sur tous les types de fils obtenus par les procédés décrits ci-dessus. Ainsi, les fils obtenus par les procédés POY sont très souvent étirés soit directement en sortie du procédé de filage (étirage intégré) soit dans une étape séparée comprenant une reprise des fils. Ces procédés sont bien connus de l'homme du métier. Ils diffèrent les uns des autres par exemple par les vitesses de filage, le mode de refroidissement en sortie de filière, par les éventuels étirages réalisés. En outre, les produits obtenus peuvent subir différents traitements particuliers tels que texturation, sur-étirage, torsions, fixations, par exemple.

Les procédés utilisés, et les paramètres techniques de ces procédés, dépendent pour une large part des propriétés du polyamide, ou de la composition à base de polyamide utilisée. Ainsi les vitesses, températures et pressions de filage qu'il est possible d'utiliser sont déterminées par rapport aux propriétés du polymère ou de la composition à filer, telles que par exemple la stabilité thermique et la viscosité à l'état fondu.

Des travaux continus sont entrepris pour améliorer la productivité de ces procédés, c'est à dire produire le plus long métrage de fils par unité de temps.
Pour améliorer la productivité de ces procédés de filage, notamment par augmentation de la vitesse de filage, il a été proposé de modifier notamment les propriétés rhéologiques de la composition à filer par addition de modifiants dans ladite composition.

Ainsi pour la fabrication de fils préorientés à base de polyéthylène téréphtalate, le document US 5962131 décrit l'ajout en phase fondue d'un copolymère non miscible formant des inclusions de petite taille dans le polymère de base.

Pour la fabrication de fils préorientés à base de polyamide, le document FR 2677376 décrit l'ajout de particules minérales nanométriques. La présence de ces particules permet d'augmenter les vitesses de filage. Il est toutefois difficile d'obtenir une bonne dispersion des particules, si bien que le taux de casses lors du filage peut être important.

Le document WO 00/068298 décrit un copolyamide hyperbranché obtenu à partir d'un monomère ARBf avec f≥2 (avec A qui est une fonction réactive de polymérisation d'un premier type, B une fonction réactive de polymérisation d'un second type et capable de réagir avec A) et d'un monomère A'R'B avec A' et B' ayant la même définition que A et B. Ce document décrit également des fils ou fibres obtenus à partir d'une composition comprenant une matrice polymère et le copolyamide hyperbranché comme additif.

La présente invention a pour objectif de proposer un procédé de fabrication de fils, fibres et filaments à base d'une composition polyamide présentant une structure moléculaire permettant d'améliorer la productivité totale du procédé de filage, notamment en améliorant la capacité d'étirage des fils produits permettant ainsi d'avoir, par exemple, pour une vitesse de filage identique un métrage de fils par unité de temps produits après étirage beaucoup plus élevé.

A cet effet, l'invention propose un procédé de fabrication de fils, fibres et filaments synthétiques à base de polyamide, comprenant les opérations suivantes :

i) Mélanger en phase fondue au moins des composés A et B suivants :

- composé A : un polyamide linéaire
- composé B choisi dans le groupe comprenant :

  ■ un polyamide ou une composition polyamide comprenant :

  - des chaînes macromoléculaires étoiles ou H comprenant un ou plusieurs coeurs et au moins trois

branches ou trois segments polyamides liées audit coeur, obtenues à partir de monomères aminoacides et/ou lactames,

- le cas échéant des chaînes macromoléculaires polyamides linéaires obtenues à partir de monomères aminoacides et/ou lactames l'indice de fluidité en phase fondue du polyamide ou de la composition polyamide mesuré selon la norme ISO 1133 à 275°C sous 100 g de charge étant supérieur à 20 g/10 min, et

■ un composé multifonctionnel comprenant au moins trois fonctions identiques acides ou amines

ii) filer le mélange en phase fondue
iii) et éventuellement étirer le ou lesdits fils, fibres ou filaments obtenus.

Les avantages liés à l'invention sont multiples et dépendent du procédé précisément mis en oeuvre. Ces avantages peuvent être observés au cours de l'opération de filage, et au cours notamment d'une opération ultérieure telle que l'étirage. Ces avantages permettent d'améliorer la productivité du procédé ou la possibilité de fabrication de produits spéciaux tels que des fils ou fibres de titre très faible.

Par "filage" on entend l'opération consistant à extruder la matière sous forme fondue à travers des filières puis à la refroidir entre les filières et au moins un premier point d'entraînement. Par "procédé de fabrication de fils, fibres et filaments", on entend l'ensemble des étapes conduisant à des fils, fibres et filaments. Le procédé comprend notamment l'opération de filage. Il peut comprendre d'autres opérations de mise en oeuvre après l'opération de filage, dont une étape d'étirage (en continu ou en reprise), permettant d'améliorer les propriétés mécaniques des produits filés et obtenir par exemple, un module et un allongement à la rupture résiduel compatibles avec les procédés d'utilisation de ces produits et les procédés de traitement de ceux-ci. On peut citer comme procédés de traitement des produits filés les traitements de relaxation, de frisage, de texturation, de thermofixation, de teinture.

Le procédé selon l'invention comprend une opération de mélange en phase fondue d'au moins deux composés, un composé A et un composé B. Les deux composés sont thermoplastiques. Le mélange peut être obtenu par tout moyen classiquement utilisé pour la réalisation d'un mélange de deux composés thermoplastiques, par exemple un dispositif d'extrusion, à simple ou double vis et/ou à vis barrière. On peut par exemple ajouter des granulés de composé B au composé A sous forme fondue, ou mélanger des granulés de composé A et de composé B et fondre le mélange de granulés. On peut ajouter d'autres additifs au mélange, tels que des pigments, délustrants, matifiants, catalyseurs, stabilisants chaleur et/ou lumière, agents antibactériens, agents antifongiques. Il peut par exemple s'agir d'un agent matifiant, par exemple choisi parmi les particules de dioxyde de titane ou de sulfure de zinc.

Le mélange en phase fondue peut être suivi d'une solidification et d'une granulation. Le mélange solide est alors refondu pour l'opération de filage. De manière avantageuse, l'opération de mélange en phase fondue est directement suivie de l'opération de filage, sans solidification et granulation intermédiaire.

Le mélange de composés est filé en phase fondue. Cette opération est réalisée par extrusion à travers des filières, à une température, et à une pression convenablement choisies. On peut utiliser tous les dispositifs de filage connus.

Selon une caractéristique de l'invention, le composé A est un polyamide linéaire; ou une composition à base d'un polyamide linéaire. A titre d'exemple de polyamides pouvant être utilisés, on cite les polyamides du type de ceux qui sont obtenus à partir des lactames et/ou des amino-acides. On cite en particulier le polyamide 6, 11, 12, les mélanges et copolymères à base de ces polyamides. Les polyamides linéaires peuvent être utilisés pour le mélange sous forme pure, ou sous forme de composition, avec par exemple un des additifs mentionnés ci-dessus.

Selon une caractéristique préférentielle de l'invention, le composé A est un polyamide linéaire; ou une composition à base d'un polyamide linéaire obtenu à partir d'un monomère diacide et d'un monomère diamine. A titre d'exemples de monomères diacides, on peut citer l'acide adipique qui est l'acide préféré, l'acide décanoïque ou sébaccique, l'acide dodécanoïque, les acides phtaliques tels que l'acide téréphtalique, l'acide isophtalique. Comme monomères diamines, on peut citer l'hexaméthylène diamine, la méthyl pentaméthylènediamine, la 4,4'-diaminodicyclohexylméthane, la butane diamine, la métaxylylène diamine. Les polyamides obtenus à partir de ces monomères sont notamment le polyamide 66 (polyadipate d'hexaméthylènediamine), le polyamide 46, le polyamine 612. Les polyamides linéaires convenables pour l'invention sont également des copolyamides comprenant au moins 90% en mole d'unités récurrentes correspondant aux polyamides décrits ci-dessus, les autres unités récurrentes pouvant provenir de monomères diacides, diamines, aminoacides ou lactames. Comme copolyamides, on peut citer, notamment le polyamide 66,6 contenant moins de 5% molaire de motif polyamide 6. Les polyamides convenables pour l'invention peuvent également comprendre un monomère monofonctionnel utilisé classiquement dans la production de ces polymères comme limitateur de chaînes.

Le composé B est, dans un premier mode de réalisation de l'invention, un polymère, ou une composition polymère comprenant des chaînes macromoléculaires étoiles ou H, et le cas échéant des chaînes macromoléculaires linéaires. Les polymères ou compositions polymères comprenant de telles chaînes macromoléculaires étoiles ou H sont

par exemple décrits dans les documents FR 2.743.077, FR 2.779.730, US 5.959.069, EP 0.632.703, EP 0.682.057 et EP 0.832.149. Ces composés sont connus pour présenter une fluidité améliorée par rapport à des polyamides linéaires. L'indice de fluidité du composé B utilisé dans le cadre de l'invention, mesuré selon la norme ISO 1133 à 275°C sous une charge de 100 g, est supérieur à 20 g/10 min.

Les chaînes macromoléculaires étoiles ou H sont obtenues par utilisation d'un composé multifonctionnel présentant au moins trois fonctions réactives, toutes les fonctions réactives étant identiques. Ce composé peut être utilisé comme comonomère en présence d'autres monomères dans un procédé de polymérisation. Il peut également être mis en présence d'un polyamide au cours d'une opération d'extrusion.

Les chaînes macromoléculaires étoiles ou H comportent un coeur et au moins trois branches polyamides. Les branches sont liées au coeur par une liaison covalente, par l'intermédiaire d'un groupement amide ou d'un groupement d'une autre nature. Le coeur est un composé chimique organique ou organométallique, de préférence un composé hydrocarboné comportant éventuellement des hétéroatomes et auquel sont reliées les branches. Les branches sont des chaînes polyamides. Elles peuvent présenter des branchements, c'est notamment le cas pour les structures H. Les chaînes polyamides constituant les branches sont de préférence du type de celles obtenues par polymérisation des lactames ou aminoacides, par exemple de type polyamide 6.

Le composé B comprend éventuellement, outre les chaînes étoiles ou H, des chaînes macromoléculaires polyamides linéaires. Le rapport en poids entre la quantité de chaînes étoiles ou H dans le composé B et la somme des quantités de chaînes étoiles ou H et de chaînes linéaires est compris entre 0,1 et 1 bornes incluses. Il est de préférence compris entre 0,5 et 1.

Selon un premier mode de réalisation du procédé de l'invention, le composé B est un polyamide étoile, c'est à dire comprenant des chaînes macromoléculaires étoiles, obtenu par copolymérisation à partir d'un mélange de monomères comprenant :

a) un composé multifonctionnel comprenant au moins trois fonctions réactives choisies parmi les amines, les acides carboxyliques, et leurs dérivés, toutes les fonctions réactives étant identiques,
b) des monomères de formules générales (IIa) et (IIb) suivantes :

$$X\text{-}R_2\text{-}Y \qquad \text{(IIa)}$$

ou

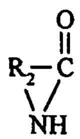 (IIb)

c) éventuellement des monomères de formule générale (III) suivante :

$$Z\text{-}R_3\text{-}Z \qquad \text{(III)}$$

dans lesquelles :

- Z représente une fonction identique à celle des fonctions réactives du composé multifonctionnel
- $R_2$, $R_3$ identiques ou différents représentent des radicaux hydrocarbonés aliphatiques, cycloaliphatiques ou aromatiques, substitués ou non, comprenant de 2 à 20 atomes de carbone, et pouvant comprendre des hétéroatomes,
- Y est un radical amine primaire quand X représente un radical carboxylique, ou
- Y est un radical carboxylique quand X représente un radical amine primaire

De tels procédés d'obtention sont décrits dans les documents FR2.743.077 et FR 2.779.730.

Dans le cas où on utilise un comonomère c), la réaction de polymérisation (polycondensation) est avantageusement effectuée jusqu'à l'atteinte de l'équilibre thermodynamique.

Le mélange de monomères peut comporter d'autres composés, tels que des limitateurs de chaînes, des catalyseurs, des additifs.

Ce procédé conduit à la formation de chaînes macromoléculaires étoiles, et éventuellement de chaînes macromoléculaires linéaires. Le pourcentage PS en nombre de chaînes macromoléculaires étoiles par rapport au nombre

total de chaînes est déterminé par les formules suivantes:

- dans le cas où le composé multifonctionnel présente 4 fonctions réactives:

$$PS = \frac{4\,T_0\,X_d^3\,(1 - X_d) + T_0\,X_d^4}{N_0\,(1 - X_d) - 2R_0X_d - 4\,T_0\,X_d + R_0\,[1 - (1 - X_d)^2] + T_0\,[1 - (1 - X_d)^4]} \times 100$$

Dans laquelle:

$$X_d = 1 - \frac{[\,COOH]}{2\,R_0 + 4\,T_0 + N_0}$$

si les fonctions réactives sont des fonctions acides

$$X_d = 1 - \frac{N_0 - [\,NH2]}{2\,R_0 + 4\,T_0 + N_0}$$

si les fonctions réactives sont des fonctions amines
$T_0$ représente le nombre de moles de composé multifonctionnel
$N_0$ représente le nombre de moles initiales en monomère de formule (IIa) ou (IIb)
$R_0$ représente le nombre de moles initiales en monomère de formule (III)

- dans le cas où le composé multifonctionnel présente 3 fonctions réactives:

$$PS = \frac{T_0\,X_d^3}{N_0\,(1 - X_d) - R_0\,X_d - 3\,T_0\,X_d + T_0\,[1 - (1 - X_d)^3]} \times 100$$

Dans laquelle:

$$X_d = 1 - \frac{[\,COOH]}{2\,R_0 + 3T_0 + N_0}$$

si les fonctions réactives sont des fonctions acides

$$X_d = 1 - \frac{N_0 - [NH2]}{2 R_0 + 3 T_0 + N_0}$$

si les fonctions réactives sont des fonctions amines
$T_0$ représente le nombre de moles de composé multifonctionnel
$N_0$ représente le nombre de moles initiales en monomère de formule (IIa) ou (IIb)
$R_0$ représente le nombre de moles initiales en monomère de formule (III)

Selon un deuxième mode de réalisation du procédé le composé B est un polyamide H, c'est à dire comprenant des chaînes macromoléculaires H, obtenu par copolymérisation à partir d'un mélange de monomères comprenant:

a) 1 à 50 μmol par gramme de matrice d'un composé multifonctionnel comprenant au moins trois fonctions réactives choisies parmi les amines, les acides carboxyliques et leurs dérivés, les fonctions réactives étant identiques,
b) des lactames et/ou amino-acides
c) un composé difonctionnel choisi parmi les acides dicarboxyliques ou les diamines,
d) un composé monofonctionnel dont la fonction est choisie parmi les amines, les acides carboxyliques et leurs dérivés,
les fonctions de c) et d) étant des amines lorsque les fonctions de a) sont des acides, les fonctions de c) et d) étant des acides lorsque les fonctions de a) sont des amines, le rapport en équivalents entre les groupements fonctionnels de a) et la somme des groupements fonctionnels de c) et d) étant compris entre 1,5 et 0,66, le rapport en équivalents entre les groupements fonctionnels de c) et les groupements fonctionnels de d) étant compris entre 0,17 et 1,5.

Un tel procédé et de tels polymères sont décrits dans le document US 5959069
Selon un troisième mode de réalisation du procédé le composé B est obtenu par mélange en fondu, par exemple à l'aide d'un dispositif d'extrusion, d'un polyamide du type de ceux obtenus par polymérisation des lactames et/ou des aminoacides, et d'un composé multifonctionnel comprenant au moins trois fonctions réactives identiques choisies parmi la fonction amine ou acide carboxylique. Le polyamide est par exemple du polyamide 6.
De tels procédés d'obtention sont décrits dans les documents EP 0.682.070 et EP 0.672.703.
Selon un autre mode de réalisation de l'invention, le composé B est un composé multifonctionnel tels que ceux utilisés comme coeur pour la synthèse des polyamides étoiles et/ou polyamide H décrits ci-dessus et ci-dessous. Ce composé est ajouté directement dans le composé A en milieu fondu de manière analogue aux procédés d'introduction des composés B de type polyamide étoile ou polyamide H.
Les composés multifonctionnels utilisés peuvent être choisis parmi les composés présentant une structure arborescente ou dendritique. Ils peuvent également être choisis parmi les composés représentés par la formule (I).

$$R1 \left[ A - z \right]_m \qquad (I)$$

dans laquelle :

- $R_1$ est un radical hydrocarboné comprenant au moins deux atomes de carbone linéaire ou cyclique, aromatique ou aliphatique et pouvant comprendre des hétéroatomes,
- A est une liaison covalente ou un radical hydrocarboné aliphatique comprenant de 1 à 6 atomes de carbone,
- Z représente un radical amine primaire ou un groupement carboxylique,
- m est un nombre entier compris entre 3 et 8.

Selon une caractéristique préférée, le radical $R_1$ est soit un radical cycloaliphatique tel que le radical tétravalent de cyclohexanonyle, soit un radical 1,1,1-triyle-propane, 1,2,3-triyle-propane.
Comme autres radicaux $R_1$ convenables pour l'invention on peut citer, à titre d'exemple, les radicaux trivalents de phényle et cyclohexanyle substitués ou non, les radicaux tétravalents de diaminopolyméthylène avec un nombre de

groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile.

Le radical A est, de préférence, un radical méthylénique ou polyméthylénique tel que les radicaux éthyle, propyle ou butyle, ou un radical polyoxyalkylènique tel que le radical polyoxyethylènique.

Selon un mode de réalisation préféré de l'invention, le nombre m est supérieur à 3 et avantageusement égal à 3 ou 4.

La fonction réactive du composé multifonctionnel représentée par le symbole X-H est une fonction capable de former une fonction amide.

A titre d'exemple de composés polyfonctionnels de formule I, on peut citer la 2,2,6,6-tétra-(β-carboxyéthyl) cyclohexanone, le diaminopropane - N,N,N',N' acide tétraacétique de formule suivante :

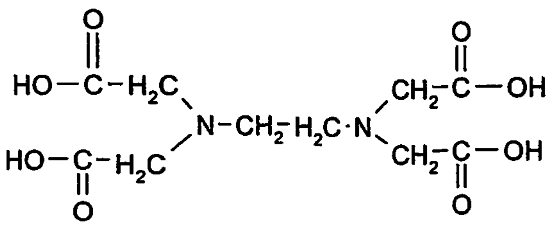

ou les composés provenant de la réaction du triméthylol propane ou du glycérol avec l'oxyde de propylène et amination des groupes hydroxyles terminaux. Ces derniers composés sont commercialisés sous le nom commercial JEFFAMINES T® par la société HUNTSMAN, et ont comme formule générale :

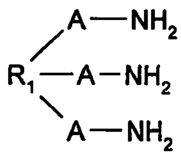

Dans laquelle :

- $R_1$ représente un radical 1,1,1-triyle propane, ou 1,2,3-triyle propane,
- A représente un radical polyoxyéthylénique.

Des exemples de composés multifonctionnels pouvant convenir sont notamment cités dans le document US 5346984, dans le document US 5959069, dans le document WO 9635739, dans le document EP 672703.
On cite plus particulièrement:

Les nitrilotrialkylamines, en particulier la nitrilotriéthylamine, les dialkylènetriamines, en particulier la diéthylènetriamine, les trialkylènetétramines et tétraalkylènepentamines, l'alkylène étant de préférence l'éthylène, la 4-aminoéthyle-1,8,octanediamine.

On cite aussi les dendrimères de formule (II)

$$(R_2\ N\text{-}(CH_2)_n)_2\text{-}N\text{-}(CH_2)_x\text{-}N\text{-}((CH_2)_{n}\text{-}NR_2)_2 \qquad \text{(II)}$$

dans laquelle
R est un atome d'hydrogène ou un groupement $-(CH_2)_n$ $-NR^1_2$ où
$R^1$ est un atome d'hydrogène ou un groupement $-(CH_2)_n$ $-NR^2_2$ où
$R^2$ est un atome d'hydrogène ou un groupement $-(CH_2)_n$ $-NR^3_2$ où
$R^3$ est un atome d'hydrogène ou un groupement $-(CH_2)_n$ $-NH_2$,
n étant un entier compris entre 2 et 6
x étant un entier compris entre 2 et 14.

n est de préférence un entier égal à 3 ou 4, en particulier 3, et x est de préférence un entier compris entre 2 et 6 (bornes incluses), de préférence égal à 2, 3 ou 4, en particulier 2. Chaque radical R peut être choisi indépendamment des autres. Le radical R est de préférence un atome d'hydrogène ou un groupement $-(CH_2)_n$-NH2.

On cite aussi les composés multifonctionnels présentant 3 à 10 groupements acide carboxylique, de préférence 3 ou 4. Parmi ceux-ci on préfère les composés présentant un cycle aromatique et/ou hétérocyclique, par exemple des radicaux benzyle, naphtyle, anthracényle, biphényle et triphényle, ou les hétérocycles comme les pyridine, bipyridine, pyrrole, indole, furane, thiophène, purine, quinoléïne, phénanthrène, porphyrine, phtalocyanine et naphtalocyanine. On préfère tout particulièrement l'acide 3,5,3',5'-biphényltétracarboxylique,les acides dérivés de la phtalocyanine et de la naphtalocyanine, l'acide 3,5,3',5'-biphényltétracârboxylique, l'acide 1,3,5,7-naphtalènetétracarboxylique, l'acide 2,4,6-pyridinetricarboxylique, l'acide 3,5,3',5'-bipyridyltétracarboxylique, l'acide 3,5,3',5'-benzophenonetétracarboxylique, l'acide 1,3,6,8-acridinetétracarboxylique, plus particulièrement encore l'acide trimésique et l'acide 1,2,4,5-benzènetétracarboxylique.

On cite aussi, les composés multifonctionnels dont le coeur est un hétérocycle présentant un point de symétrie, comme les 1,3,5-triazines, 1,4-diazines, la mélamine, les composés dérivés de la 2,3,5,6-tétraéthylpipérazine, des 1,4-pipérazines, des tétrathiafulvalènes. On cite plus particulièrement l'acide 2,4,6-triaminocaproïque-1,3,5-triazine (TACT).

La proportion en poids du composé B par rapport au poids de composés A et B dans le mélange est avantageusement inférieure à 30%, de préférence inférieure à 20%, plus préférablement encore inférieure à 15%. On ne tient pas compte selon cette caractéristique de la présence éventuelle d'autres additifs.

Les fils, fibres et filaments obtenus à partir du mélange des composés A et B comprennent des chaînes macromoléculaires polyamides étoiles ou H, et des chaînes polyamide linéaire. La proportion en poids des chaînes macromoléculaires étoiles ou H par rapport au poids total des chaînes macromoléculaires étoiles ou H et linéaires est de préférence inférieure à 25%, plus préférablement encore inférieure à 15%

Le procédé selon l'invention peut plus particulièrement, dans un premier mode de réalisation, être employé dans le cadre d'un procédé de filage haute vitesse, par exemple à des vitesses supérieures à 3500 m/min, de type POY, HOY, au FEI, pour la fabrication de fils multifilamentaires ou dans le procédé LOY pour la fabrication de fibres.

Les fils obtenus présentent de manière surprenante une capacité d'étirabilité supérieure à celle observée sur les fils obtenus à partir de polyamide linéaire classiquement utilisé, tel que le polyamide 66 pour des propriétés mécaniques comparables et compatibles avec l'utilisation de ces produits dans les différents applications telles que l'industrie textile. En effet, les produits obtenus selon le procédé de l'invention présentent un module et un allongement résiduel à la rupture équivalents à ceux présentés par les fils en polyamide 66.

Cette étirabilité améliorée permet donc d'améliorer la productivité du procédé de fabrication des fils soit par augmentation de la vitesse de filage, soit par augmentation du taux d'étirage appliqué aux fils obtenus ou par application de ces deux augmentations. En d'autres termes, le procédé de l'invention permet de fabriquer des fils, fibres ou monofilaments avec application d'un taux d'étirage global, taux d'étirage appliqué au filage plus taux d'étirage appliqué pendant l'étape d'étirage, plus élevé que celui applicable sur les fils en polyamide linéaire, pour un même niveau de module et d'allongement à la rupture pour le fil ainsi obtenu.

Le procédé de l'invention permet également de produire par filage en fondu et étirage des fils de titre très fin, par exemple, inférieur à 0,8 dtex, de préférence, inférieur à 0,6 dtex. En effet, il est possible de produire selon le procédé de l'invention des fils en sortie de filière présentant un titre fin, de manière analogue à celui obtenu avec un polyamide linéaire, et avec un dispositif analogue. Toutefois, comme il est possible d'appliquer sur les fils obtenus par le procédé de l'invention un taux d'étirage plus élevé, on comprend facilement que le titre final du fil selon l'invention est nettement plus faible pour des propriétés mécaniques équivalentes. Cette possibilité est notamment très intéressante pour la fabrication de fibres, de titre très faible.

Le procédé selon l'invention peut, selon un deuxième mode de réalisation, être employé dans le cadre d'une fabrication de fils, fibres et filaments à partir d'un polyamide linéaire de haute masse moléculaire. Ces polyamides sont généralement utilisés pour obtenir des propriétés mécaniques et/ou des propriétés de résistance chimique ou thermique améliorées, comme la résistance à l'abrasion. Il est en particulier adapté à la fabrication de fibres pour feutres pour machines à papier. L'utilisation du composé B permet de filer à plus basse température et/ou à pression réduite par rapport aux conditions qui seraient nécessaires en l'absence du composé. On peut ainsi soit obtenir des fils qui résistent mieux à l'abrasion car la masse moléculaire du polyamide est plus élevée, soit obtenir des fibres dont les propriétés sont similaires, avec un procédé moins contraignant. A titre de mode de réalisation particulier, le polyamide linéaire est un polyamide 6, dont la viscosité relative, mesurée à 25°C à une concentration de 0,01 g/ml dans une solution d'acide sulfurique à 96%, est supérieure à 3,5, de préférence supérieure à 3,8.

Selon un mode de réalisation particulier, lors de l'opération de mélange des composés A et B, ces derniers sont introduits sous forme séchée, avec de préférence un taux d'humidité inférieure à 0,3 %, et on ajoute un composé susceptible de catalyser la polycondensation du polyamide, de préférence en concentration pondérale comprise entre 0,005% et 5%. Ce composé peut être choisi parmi les composés phosphorés, par exemple l'acide phosphorique, le tris (2,4-di-tert-butyl phényl) phosphite (commercialisé par la société CIBA sous la référence Irgafos 168, ou en mélange

avec le N,N-hexaméthylène bis (3,5-di-tert-butyl-4-hydroxyhydrocinnamamide) sous la référence Irganox B 1171). Ce composé peut être ajouté sous forme de poudre ou sous concentrée dans une matrice de polyamide (mélange-maître). Le mélange des différents composés est mis en oeuvre dans un dispositif d'extrusion simple ou double vis.

Pour la fabrication de fibres destinées à être utilisées sous forme non-tissée dans des feutres de machines à papier, le filage est généralement effectué à vitesse modérée, inférieure à 1000 m/min, avec un étirage subséquent.

D'autres détails ou avantages de l'invention apparaîtront plus clairement au vu des exemples donnés ci-dessous, uniquement à titre indicatif.

On utilise les composés suivants:

Composé A : polyamide 66 d'indice de viscosité de 136 ml/g, mesurée à 25°C à une concentration de 0,01 g/ml dans une solution d'acide formique à 90%, avec une concentration en fonctions terminales acides (GTA) de 55 meq/ g de polymère et une concentration en fonctions terminales amines (GTC) de 66 meq/ g de polymère.

Composé B : polyamide étoile, obtenu par copolymérisation à partir de caprolactame en présence 0,5% en moles de 2,2,6,6-tétra( -carboxyéthyl)cyclohexanone, selon un procédé décrit dans le document FR 2743077, comprenant environ 80% de chaînes macromoléculaires étoiles et 20% de chaînes macromoléculaires linéaires, d'indice de viscosité de 98,2 ml/g mesurée selon la méthode décrite ci-dessus et une GTA de 13,9 meq/ g et une GTC de 165,3 meq/g, et d'indice de fluidité en phase fondue mesuré à 275°C sous 100 g de 55 g/10 minute.

Composé C: polyamide 6 de viscosité relative, mesurée à 25°C à une concentration de 0,01 g/ml dans une solution d'acide sulfurique à 96%, d'environ 3,8, commercialisé par la société BASF sous la référence B4000.

Les propriétés d'allongement rupture et de contrainte rupture des fils sont déterminées sur une machine de traction Erichsen placée sous local climatisé à 50% HR et 23°C après conditionnement des fils pendant 72 heures dans ces conditions. La longueur initiale des fils est de 50 mm et la vitesse de traverse est de 50 mm/min. Ces mesures sont réalisées selon les normes ISO 2062 ou AFNOR 07-002.

<u>Exemples 1 à 4</u>

On mélange les composés en phase fondue à l'aide d'un dispositif d'extrusion monovis puis on file le mélange fondu, avec une vitesse au premier point d'appel, appelée également vitesse de filage, de 4200 m/min, de manière à obtenir un fil continu comprenant 34 filaments de titre total indiqué dans le tableau I ci-dessous. Les conditions de filage sont rassemblées dans le tableau I ci-dessous, les propriétés des fils obtenus étant rassemblées dans le tableau II.

Tableau I

| EX | Composition (% poids) | Température de filière (°C) | Pression de filage (bar) | Débit de polymère dans filière g/min | Vitesse de filage (m/min) |
|---|---|---|---|---|---|
| 1c | composé A: 100% | 276 | 230 | 1,23 | 4200 |
| 2 | Composé A: 90 %<br>Composé B : 10 % | 276 | 280 | 1,23 | 4200 |
| 3 | Composé A: 90 %<br>Composé B : 10 % | 276 | 280 | 1,23 | 4800 |
| 4 | Composé A: 90 %<br>Composé B : 10 % | 276 | 280 | 1,23 | 5400 |

Tableau II

| EX | Titre total (dtex) | allongement à la rupture (%) | Module à 5 % d'allongement (cN/tex) |
|---|---|---|---|
| 1c | 100 | 70 | 109 |
| 2 | 99 | 94,2 | 104 |

(suite)

| EX | Titre total (dtex) | allongement à la rupture (%) | Module à 5 % d'allongement (cN/tex) |
|---|---|---|---|
| 3 | 86 | 86,6 | 116 |
| 4 | 76,6 | 76,2 | 137 |

les fils obtenus à une vitesse de 4200 m/min ont été étirés sur un banc d'étirage, les propriétés des fils obtenus sont rassemblés dans le tableau III ci-dessous.

Tableau III

| EX | taux d'étirage | titre (dtex) | allongement à la rupture (%) | Module à 5 % d'allongement (cN/tex) |
|---|---|---|---|---|
| 1c | 1,312 | 81,2 | 36,9 | 257 |
| 2 | 1,437 | 71,4 | 44,6 | 257 |

Ces essais montrent qu'il est possible d'appliquer un taux d'étirage supérieur sur les fils conforme à l'invention tout en obtenant des fils présentant un module à 5% identique à celui obtenu avec un fil en polyamide 66 avec un allongement résiduel plus élevé. Cette dernière caractéristique d'allongement résiduel élevé permet d'améliorer l'aptitude à la travaillabilté des fils.

Exemple 5

On mélange les composés en phase fondue à l'aide d'un dispositif d'extrusion double vis, puis on file le mélange fondu, avec une vitesse au premier point d'appel de 3300 m/min, de manière à obtenir un fil continu multifilamentaire de 55 dtex pour 10 filaments. Les température, pression et marche de filage, ainsi que les propriétés des fils obtenus sont précisées en tableau IV.

Exemple comparatif 6

On réalise un fil comme dans l'exemple 5, uniquement à partir du composé C. Les température, pression et marche du filage, ainsi que les propriétés des fils obtenus sont précisées en tableau IV.

Tableau IV

| | Exemple 5 | Exemple comparatif 6 |
|---|---|---|
| Composé C | 80% | 100% |
| Composé B | 20% | |
| Température de filage | 285°C | 320°C |
| Marche du filage | Peu de casses | Nombres de casses très important |
| Pression dans la filière | 150 bars. | 150 bars |
| Allongement rupture (%) | 95 | 95 |
| Contrainte rupture (cN/tex) | 25 | 25 |

**Revendications**

1. Procédé de fabrication de fils, fibres et filaments synthétiques à base de polyamide, comprenant les opérations suivantes :

i) Mélanger en phase fondue au moins des composés A et B suivants :

- composé A : un polyamide linéaire
- composé B:

■ un polyamide ou une composition polyamide comprenant :

- des chaînes macromoléculaires étoiles ou H comprenant un ou plusieurs coeurs et au moins trois branches ou trois segments polyamides liées audit coeur, obtenues à partir de monomères aminoacides et/ou lactames, et à partir d'un composé multifonctionnel présentant au moins trois fonctions réactives, toutes les fonctions réactives étant identiques,
- le cas échéant des chaînes macromoléculaires polyamides linéaires obtenues à partir de monomères aminoacides et/ou lactames l'indice de fluidité en phase fondue du polyamide ou de la composition polyamide mesuré selon la norme ISO 1133 à 275°C sous 100 g de charge étant supérieur à 20 g/10 min, et

i) filer le mélange en phase fondue
ii) et éventuellement étirer le ou lesdits fils, fibres ou filaments obtenus. La proportion en poids dans le mélange par rapport au poids total des composés A et B est inférieure à 30%.

2. Procédé selon la revendication 1 **caractérisé en ce que** le rapport en poids entre les chaînes macromoléculaires étoiles ou H et la somme des chaînes macromoléculaires étoiles ou H et des chaînes linéaires dans le composé B est compris entre 0,1 et 1.

3. Procédé selon l'une des revendications précédentes **caractérisé en ce que** le composé B est un polyamide étoile obtenu par copolymérisation à partir d'un mélange de monomères comprenant:

a) un composé multifonctionnel comprenant au moins trois fonctions réactives choisies parmi les amines, les acides carboxyliques, et leurs dérivés, les fonctions réactives étant identiques,
b) des monomères de formules générales (IIa) et/ou (IIb) suivantes:

$X\text{-}R_2\text{-}Y$ (IIa)

ou

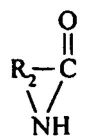
(IIb)

c) le cas échéant des monomères de formule générale (III) suivante:

$Z\text{-}R_3\text{-}Z$ (III)

dans lesquelles :

- Z représente une fonction identique à celle des fonctions réactives du composé multifonctionnel
- $R_2$, $R_3$ représentent des radicaux hydrocarbonés aliphatiques, cycloaliphatiques ou aromatiques, substitués ou non, identiques ou différents, comprenant de 2 à 20 atomes de carbone, et pouvant comprendre des hétéroatomes,
- Y est un radical amine primaire quand X représente un radical carboxylique, ou
- Y est un radical carboxylique quand X représente un radical amine primaire,

4. Procédé selon l'une des revendications 1 ou 2 **caractérisé en ce que** le composé B est un polyamide H obtenu par copolymérisation à partir d'un mélange de monomères comprenant:

a) 1 à 50 µmol par gramme de polymère du composé B d'un composé multifonctionnel comprenant au moins trois fonctions réactives choisies parmi les amines, les acides carboxyliques et leurs dérivés, les fonctions réactives étant identiques,
b) des lactames et/ou amino-acides
c) un composé difonctionnel choisi parmi les acides dicarboxyliques ou les diamines,
d) un composé monofonctionnel dont la fonction est choisie parmi les amines, les acides carboxyliques et leurs dérivés,

les fonctions de c) et d) étant des amines lorsque les fonctions de a) sont des acides, les fonctions de c) et d) étant des acides lorsque les fonctions de a) sont des amines, le rapport en équivalents entre les groupements fonctionnels de a) et la somme des groupements fonctionnels de c) et d) étant compris entre 1,5 et 0,66, le rapport en équivalents entre les groupements fonctionnels de c) et les groupements fonctionnels de d) étant compris entre 0,17 et 1,5.

**5.** Procédé selon l'une des revendications 1 ou 2 **caractérisé en ce que** le composé B est obtenu par extrusion d'un polyamide du type de ceux obtenus par polymérisation des lactames et/ou amino-acides avec un composé multifonctionnel comprenant au moins trois fonctions réactives choisies parmi les amines, les acides carboxyliques et leurs dérivés, les fonctions réactives étant identiques.

**6.** Procédé selon l'une des revendications 3 à 5 **caractérisé en ce que** le composé multifonctionnel présente une structure arborescente ou dendritique.

**7.** Procédé selon l'une des revendications 3 à 5 **caractérisé en ce que** le composé multifonctionnel est représenté par la formule (I)

$$R1 - \left[ A - z \right]_m \qquad (I)$$

dans laquelle :

- $R_1$ est un radical hydrocarboné comprenant au moins deux atomes de carbone linéaire ou cyclique, aromatique ou aliphatique et pouvant comprendre des hétéroatomes,
- A est une liaison covalente ou un radical hydrocarboné aliphatique comprenant de 1 à 6 atomes de carbone,
- Z représente un radical amine primaire ou un groupement carboxylique
- m est un nombre entier compris entre 3 et 8.

**8.** Procédé selon la revendication 7 **caractérisé en ce que** le composé multifonctionnel est choisi parmi la 2,2,6,6-tétra-(β-carboxyéthyl)-cyclohexanone, l'acide trimésique, la 2,4,6-tri-(acide aminocaproique)-1,3,5-triazine, la 4-aminoéthyle-1,8-octanediamine.

**9.** Procédé selon l'une des revendication précédentes **caractérisé en ce que** la proportions en poids du composé B dans le mélange par rapport au poids total des composés A et B est inférieure à 20%.

**10.** Procédé selon la revendication 9 **caractérisé en ce que** la proportions en poids du composé B dans le mélange par rapport au poids total des composés A et B est inférieure à 15%.

**11.** Procédé selon l'une des revendications précédentes **caractérisé en ce que** la proportion en poids en chaînes macromoléculaires étoiles ou H du composé B dans le mélange par rapport au poids total des composés A et B est inférieure à 25 %.

**12.** Procédé selon l'une des revendications précédentes **caractérisé en ce que** la proportion en poids en chaînes macromoléculaires étoiles ou H du composé B dans le mélange par rapport au poids total des composés A et B est inférieure à 15%.

**13.** Procédé selon l'une des revendications précédentes **caractérisé en ce que** le composé A est un polyamide choisi parmi le polyamide 6, le polyamide 11, le polyamide 12, les mélanges et copolymères à base de ces polyamides.

**14.** Procédé selon l'une des revendications précédentes **caractérisé en ce que** le composé A est un polyamide 6 de viscosité relative supérieure à 3,5.

**15.** Procédé selon l'une des revendications 1 à 12, **caractérisé en ce que** le composé A est un polyamide linéaire obtenu à partir de monomères diacides et monomères diamines

**16.** Procédé selon la revendication 15 **caractérisé en ce que** le composé A est un polyamide 66 obtenu à partir d'acide adipique et d'hexaméthylènediamine.

**17.** Procédé selon l'une des revendications 15 ou 16 **caractérisé en ce que** le composé A est un copolyamide comprenant au moins 90% en mole d'unités récurrentes d'adipate d'hexaméthylène diamine.

**18.** Procédé selon l'une des revendications précédentes **caractérisé en ce qu'**un composé susceptible de catalyser la polycondensation du polyamide est ajouté au mélange, les composés A et B étant sous forme séchée.

**19.** Procédé selon l'une des revendications précédentes, **caractérisé en ce que** le filage est réalisé avec une vitesse de filage supérieure à 3500 m/min.

**20.** Fils, fibres et filaments susceptibles d'être obtenus par un procédé selon l'une des revendications précédentes.

**21.** Fils, fibres et filaments susceptibles d'être obtenus par le procédé selon l'une des revendications 1 à 19, **caractérisés en ce que** le titre monofilamentaire est inférieur à 0,8 dtex, de préférence inférieur à 0,6 dtex.

## Claims

**1.** Process for producing synthetic polyamide-based yarns, fibres and filaments, comprising the following operations:

i) melt-blending at least the compounds A and B below:

• compound A: a linear polyamide
• compound B:

■ a polyamide or a polyamide composition comprising:

- star or H-shaped macromolecular chains comprising one or more cores and at least three polyamide branches or three polyamide segments linked to said core, obtained from amino acid and/or lactam monomers, and from a multifunctional compound having at least three reactive functional groups, all the reactive functional groups being identical;
- where appropriate, linear polyamide macromolecular chains obtained from amino acid and/or lactam monomers, the melt flow index of the polyamide or of the polyamide composition measured according to the ISO 1133 standard at 275°C under a load of 100 g being greater than 20 g/10 min; and

ii) melt-spinning the blend; and
iii) optionally drawing said yarn(s), fibre(s) or filament(s) obtained. The weight proportion in the blend relative to the total weight of the compounds A and B is less than 30%.

**2.** Process according to Claim 1, **characterized in that** the weight ratio of the star or H-shaped macromolecular chains to the sum of the star or H-shaped macromolecular chains and linear chains in the compound B is between 0.1 and 1.

**3.** Process according to one of the preceding claims, **characterized in that** the compound B is a star polyamide obtained by copolymerization from a mixture of monomers comprising:

a) a multifunctional compound comprising at least three reactive functional groups chosen from amines, carboxylic acids and derivatives thereof, the reactive functional groups being identical;
b) monomers of general formulae (IIa) and/or (IIb) below:

$X\text{-}R_2\text{-}Y$ (IIa)

or

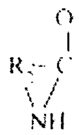 (IIb)

c) where appropriate monomers of general formula (III) below:

$Z\text{-}R_3\text{-}Z$ (III)

in which:

- Z represents a functional group identical to that of the reactive functional groups of the multifunctional compound;
- $R_2$ and $R_3$ represent identical or different, substituted or unsubstituted, aliphatic, cycloaliphatic or aromatic hydrocarbon-based radicals comprising from 2 to 20 carbon atoms, and which may comprise heteroatoms;
- Y is a primary amine radical when X represents a carboxylic radical; or
- Y is a carboxylic radical when X represents a primary amine radical.

**4.** Process according to either of Claims 1 and 2, **characterized in that** the compound B is an H-shaped polyamide obtained by copolymerization from a mixture of monomers comprising:

a) 1 to 50 μmol per gram of compound B polymer of a multifunctional compound comprising at least three reactive functional groups chosen from amines, carboxylic acids and derivatives thereof, the reactive functional groups being identical;
b) lactams and/or amino acids;
c) a difunctional compound chosen from dicarboxylic acids or diamines; and
d) a monofunctional compound whose functional group is chosen from amines, carboxylic acids and derivatives thereof,

the functional groups of c) and d) being amines when the functional groups of a) are acids, the functional groups of c) and d) being acids when the functional groups of a) are amines, the ratio, in equivalents, of the functional groups of a) to the sum of the functional groups of c) and d) being between 1.5 and 0.66, the ratio, in equivalents, of the functional groups of c) to the functional groups of d) being between 0.17 and 1.5.

**5.** Process according to either of Claims 1 and 2, **characterized in that** the compound B is obtained by extrusion of a polyamide of the type of those obtained by polymerization of lactams and/or amino acids with a multifunctional compound comprising at least three reactive functional groups chosen from amines, carboxylic acids and derivatives thereof, the reactive functional groups being identical.

**6.** Process according to one of Claims 3 to 5, **characterized in that** the multifunctional compound has an arborescent or dendritic structure.

**7.** Process according to one of Claims 3 to 5, **characterized in that** the multifunctional compound is represented by the formula (I):

$R_1\text{-}[\text{-}A\text{-}Z]_m$ (I)

in which:

- $R_1$ is a linear or cyclic, aromatic or aliphatic hydrocarbon-based radical comprising at least two carbon atoms and which may comprise heteroatoms;
- A is a covalent bond or an aliphatic hydrocarbon-based radical comprising from 1 to 6 carbon atoms;

- Z represents a primary amine radical or a carboxylic group; and
- m is an integer between 3 and 8.

**8.** Process according to Claim 7, **characterized in that** the multifunctional compound is chosen from 2,2,6,6-tetra(β-carboxyethyl)cyclohexanone, trimesic acid, 2,4,6-tri(aminocaproic acid)-1,3,5-triazine and 4-aminoethyl-1,8-octanediamine.

**9.** Process according to one of the preceding claims, **characterized in that** the weight proportions of the compound B in the mixture relative to the total weight of the compounds A and B is less than 20%.

**10.** Process according to Claim 9, **characterized in that** the weight proportions of the compound B in the mixture relative to the total weight of the compounds A and B is less than 15%.

**11.** Process according to one of the preceding claims, **characterized in that** the weight proportion of star or H-shaped macromolecular chains of the compound B in the mixture relative to the total weight of the compounds A and B is less than 25%.

**12.** Process according to one of the preceding claims, **characterized in that** the weight proportion of star or H-shaped macromolecular chains of the compound B in the mixture relative to the total weight of the compounds A and B is less than 15%.

**13.** Process according to one of the preceding claims, **characterized in that** the compound A is a polyamide chosen from polyamide PA-6, polyamide PA-11, polyamide PA-12, and blends and copolymers based on these polyamides.

**14.** Process according to one of the preceding claims, **characterized in that** the compound A is a polyamide PA-6 with a relative viscosity greater than 3.5.

**15.** Process according to one of Claims 1 to 12, **characterized in that** the compound A is a linear polyamide obtained from diacid monomers and diamine monomers.

**16.** Process according to Claim 15, **characterized in that** the compound A is a polyamide PA-6,6 obtained from adipic acid and hexamethylenediamine.

**17.** Process according to either of Claims 15 and 16, **characterized in that** the compound A is a copolyamide comprising at least 90 mol% of hexamethylenediamine adipate repeat units.

**18.** Process according to one of the preceding claims, **characterized in that** a compound capable of catalysing the polycondensation of the polyamide is added to the blend, the compounds A and B being in dry form.

**19.** Process according to one of the preceding claims, **characterized in that** the spinning is carried out with a spinning rate greater than 3500 m/min.

**20.** Yarns, fibres and filaments capable of being obtained by a process according to one of the preceding claims.

**21.** Yarns, fibres and filaments capable of being obtained by the process according to one of Claims 1 to 19, **characterized in that** the monofilament linear density is less than 0.8 dtex, preferably less than 0.6 dtex.

## Patentansprüche

**1.** Verfahren zur Herstellung von synthetischen Fäden, Fasern und Filamenten auf der Basis von Polyamid, umfassend die folgenden Operationen:

(i) Vermischen in geschmolzener Phase von mindestens den folgenden Verbindungen A und B:

- Verbindung A: einem linearen Polyamid,
- Verbindung B:

. einem Polyamid oder einer Polyamid-Zusammensetzung, umfassend:

- makromolekulare Ketten, sternförmig oder H, umfassend einen oder mehrere Kerne und mindestens drei Polyamid-Äste oder drei Polyamid-Segmente, die an den genannten Kern gebunden sind, erhalten ausgehend von Aminosäure-Monomeren und/oder Lactam-Monomeren, und ausgehend von einer multifunktionellen Verbindung, die mindestens drei reaktive Funktionen aufweist, wobei alle reaktiven Funktionen identisch sind,
- gegebenenfalls lineare makromolekulare Polyamid-Ketten, erhalten ausgehend von Aminosäure-Monomeren und/oder Lactam-Monomeren, mit einem Fluiditätsindex des Polyamids oder der Polyamid-Zusammensetzung in geschmolzener Phase, gemessen nach der Norm ISO 1133 bei 2.75 °C unter 100 g Belastung, von über 20 g/10 min, und

(ii) Verspinnen der Mischung in geschmolzener Phase, und
(iii) gegebenenfalls Strecken des oder der genannten erhaltenen Fäden, Fasern oder Filamente. Das Gewichtsverhältnis in der Mischung, bezogen auf das Gesamtgewicht der Verbindungen A und B, beträgt unter 30%.

**2.** Verfahren nach Anspruch 1, **dadurch gekennzeichnet, dass** das Gewichtsverhältnis zwischen den makromolekularen Ketten, sternförmig oder H, und der Summe der makromolekularen Ketten, sternförmig oder H, und der linearen Ketten in der Verbindung B zwischen einschließlich 0,1 und 1 beträgt.

**3.** Verfahren nach einem der vorstehenden Ansprüche, **dadurch gekennzeichnet, dass** die Verbindung B ein sternförmiges Polyamid ist, erhalten durch Copolymerisation ausgehend von einer Mischung von Monomeren, umfassend:

a) eine multifunktionelle Verbindung, umfassend mindestens drei reaktive Funktionen, ausgewählt unter den Aminen, den Carbonsäuren und ihren Derivaten, wobei die reaktiven Funktionen identisch sind,
b) Monomere der folgenden allgemeinen Formeln (IIa) und/oder (IIb):

$X\text{-}R_2\text{-}Y$ (IIa)

oder

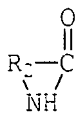 (IIb)

c) gegebenenfalls Monomere der folgenden allgemeinen Formel (III)

$Z\text{-}R_3\text{-}Z$ (III)

in denen

• Z eine identische Funktion aufweist wie die reaktiven Funktionen der multifunktionellen Verbindung,
• $R_2$, $R_3$ gleiche oder verschiedene, substituierte oder nicht substituierte, aliphatische, cycloaliphatische oder aromatische Kohlenwasserstoff-Reste darstellen, umfassend 2 bis 20 Kohlenstoffatome, die Heteroatome umfassen können,
• Y ein primärer Amin-Rest ist, wenn X einen Carbonsäure-Rest darstellt, oder
• Y ein Carbonsäure-Rest ist, wenn X einen primären Amin-Rest darstellt.

**4.** Verfahren nach einem der Ansprüche 1 oder 2, **dadurch gekennzeichnet, dass** die Verbindung B ein Polyamid H ist, erhalten durch Copolymerisation ausgehend von einer Mischung von Monomeren, umfassend

a) 1 bis 50 μmol pro Gramm Polymer der Verbindung B von einer multifunktionellen Verbindung, umfassend mindestens drei reaktive Funktionen, ausgewählt unter den Aminen, den Carbonsäuren und ihren Derivaten,

wobei die reaktiven Funktionen identisch sind,
b) Lactame und/oder Aminosäuren,
c) eine difunktionelle Verbindung, ausgewählt unter den Dicarbonsäuren oder den Diaminen,
d) eine monofunktionelle Verbindung, deren Funktion ausgewählt wird unter den Aminen, den Carbonsäuren und ihren Derivaten,

wobei die Funktionen von c) und d) Amine sind, wenn die Funktionen von a) Säuren sind; die Funktionen von c) und d) Säuren sind, wenn die Funktionen von a) Amine sind; und das Verhältnis in Äquivalenten zwischen den funktionellen Gruppen von a) und der Summe der funktionellen Gruppen von c) und d) zwischen einschließlich 1,5 und 0,66 beträgt; sowie das Verhältnis in Äquivalenten zwischen den funktionellen Gruppen von c) und den funktionellen Gruppen von d) zwischen einschließlich 0,17 und 1,5 beträgt.

**5.** Verfahren nach einem der Ansprüche 1 oder 2, **dadurch gekennzeichnet, dass** die Verbindung B durch Extrusion eines Polyamids von dem Typ erhalten wird, wie er durch Polymerisation von Lactamen und/oder Aminosäuren mit einer multifunktionellen Verbindung erhalten wird, die mindestens drei reaktive Funktionen umfasst, ausgewählt unter den Aminen, den Carbonsäuren und ihren Derivaten, wobei die reaktiven Funktionen identisch sind.

**6.** Verfahren nach einem der Ansprüche 3 bis 5, **dadurch gekennzeichnet, dass** die multifunktionelle Verbindung eine baumartige oder dendritische Struktur aufweist.

**7.** Verfahren nach einem der Ansprüche 3 bis 5, **dadurch gekennzeichnet, dass** die multifunktionelle Verbindung durch die Formel (I)

$$R_1 \left[ A - Z \right]_m \qquad (I)$$

dargestellt wird, in der

- $R_1$ ein Kohlenwasserstoff-Rest ist, umfassend mindestens zwei lineare oder cyclische, aromatische oder aliphatische Kohlenstoffatome, der Heteroatome umfassen kann,
- A eine kovalente Bindung oder ein aliphatischer Kohlenwasserstoff-Rest ist, umfassend 1 bis 6 Kohlenstoffatome,
- Z einen primären Amin-Rest oder eine Carbonsäuregruppe darstellt,
- m eine ganze Zahl zwischen einschließlich 3 und 8 ist.

**8.** Verfahren nach Anspruch 7, **dadurch gekennzeichnet, dass** die multifunktionelle Verbindung ausgewählt wird unter 2,2,6,6-Tetra-(β-carboxyethyl)-cyclohexanon, Trimesinsäure, 2,4,6-Tri-(aminocapronsäure))-1,3,5-triazin, 4-Aminoethyl-1,8-octandiamin.

**9.** Verfahren nach einem der vorstehenden Ansprüche, **dadurch gekennzeichnet, dass** der Gewichtsanteil der Verbindung B in der Mischung, im Verhältnis zum Gesamtgewicht der Verbindungen A und B, unter 20 % beträgt.

**10.** Verfahren nach Anspruch 9, **dadurch gekennzeichnet, dass** der Gewichtsanteil der Verbindung B in der Mischung, im Verhältnis zum Gesamtgewicht der Verbindungen A und B, unter 15 % beträgt.

**11.** Verfahren nach einem der vorstehenden Ansprüche, **dadurch gekennzeichnet, dass** der Gewichtsanteil an makromolekularen Ketten, sternförmig oder H, der Verbindung B in der Mischung, im Verhältnis zum Gesamtgewicht der Verbindungen A und B, unter 25 % beträgt.

**12.** Verfahren nach einem der vorstehenden Ansprüche, **dadurch gekennzeichnet, dass** der Gewichtsanteil an makromolekularen Ketten, sternförmig oder H, der Verbindung B in der Mischung, im Verhältnis zum Gesamtgewicht der Verbindungen A und B, unter 15 % beträgt.

**13.** Verfahren nach einem der vorstehenden Ansprüche, **dadurch gekennzeichnet, dass** die Verbindung A ein Polyamid ist, ausgewählt unter Polyamid 6, Polyamid 11, Polyamid 12, den Mischungen und Copolymeren auf der Basis

dieser Polyamide.

14. Verfahren nach einem der vorstehenden Ansprüche, **dadurch gekennzeichnet, dass** die Verbindung A ein Polyamid 6 ist, mit einer relativen Viskosität von über 3,5.

15. Verfahren nach einem der Ansprüche 1 bis 12, **dadurch gekennzeichnet, dass** die Verbindung A ein lineares Polyamid ist, erhalten ausgehend von Disäure-Monomeren und Diamin-Monomeren.

16. Verfahren nach Anspruch 15, **dadurch gekennzeichnet, dass** die Verbindung A ein Polyamid 66 ist, erhalten ausgehend von Adipinsäure und Hexamethylendiamin.

17. Verfahren nach einem der Ansprüche 15 oder 16, **dadurch gekennzeichnet, dass** die Verbindung A ein Polyamid ist, das mindestens 90 Mol-% wiederkehrende Einheiten von Hexamethylendiaminadipat umfasst.

18. Verfahren nach einem der vorstehenden Ansprüche, **dadurch gekennzeichnet, dass** eine Verbindung der Mischung zugesetzt wird, die geeignet ist, die Polykondensation des Polyamids zu katalysieren, wobei die Verbindungen A und B in trockener Form vorliegen.

19. Verfahren nach einem der vorstehenden Ansprüche, **dadurch gekennzeichnet, dass** das verspinnen mit einer Spinngeschwindigkeit von über 3500 m/min durchgeführt wird.

20. Fäden, Fasern und Filamente, die geeignet sind, durch ein Verfahren nach einem der vorstehenden Ansprüche erhalten zu werden.

21. Fäden, Fasern und Filamente, die geeignet sind, durch das Verfahren nach einem der Ansprüche 1 bis 19 erhalten zu werden, **dadurch gekennzeichnet, dass** der monofilamentäre Titer unter 0,8 dtex, vorzugsweise unter 0,6 dtex beträgt.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5962131 A
- FR 2677376
- WO 00068298 A
- FR 2743077
- FR 2779730
- US 5959069 A
- EP 0632703 A
- EP 0682057 A
- EP 0832149 A
- EP 0682070 A
- EP 0672703 A
- US 5346984 A
- WO 9635739 A
- EP 672703 A